# EUROPÄISCHE PATENTSCHRIFT

(11) **EP 2 961 640 B1**
(45) Veröffentlichungstag und Bekanntmachung des Hinweises auf die Patenterteilung: **30.05.2018**
(21) Anmeldenummer: 14706577.5
(22) Anmeldetag: 25.02.2014
(51) Int. Cl.: B60R 22/46

(54) **GURTAUFROLLER MIT EINER ELEKTROMOTORISCHEN WICKELHILFE UND VERFAHREN ZUR ANSTEUERUNG EINER ELEKTROMOTORISCHEN WICKELHILFE FÜR EINEN GURTAUFROLLER**
BELT RETRACTOR WITH AN ELECTROMOTORIC WINDING DRIVE AND METHOD FOR CONTROLLING AN ELECTROMOTIC WINDING DRIVE FOR A BELT RETRACTOR
RÉTRACTEUR DE SANGLE COMPORTANT UN ENROULEUR EINTRAÎNÉ PAR MOTEUR ÉLECTRIQUE ET MÉTHODE POUR COMMANDER UN ENROULEUR EINTRAÎNÉ PAR MOTEUR ÉLECTRIQUE POUR ENROULER DE CEINTURE

(30) Priorität: 26.02.2013 DE 102013203144
(43) Veröffentlichungstag der Anmeldung: 06.01.2016
(73) Patentinhaber: Autoliv Development AB, 447 83 Vårgårda (SE)
(72) Erfinder: SÜLLAU, Patrick, 24558 Henstedt-Ulzburg (DE); LUCHT, Andreas, 25358 Horst (DE); LANGHOFF, Hans-Jörg, 25474 Bönningstedt (DE); KOCK, Hans-Otto, 25368 Kiebitzreihe (DE); RINGS, Philip, 22335 Hamburg (DE)
(74) Vertreter: Müller Verweyen
(86) Internationale Anmeldenummer: PCT/EP2014/053589
(87) Internationale Veröffentlichungsnummer: WO 2014/131744

(56) Entgegenhaltungen:
- EP-A1- 1 759 938
- EP-A2- 1 642 788
- DE-A1-102004 054 078
- DE-A1-102006 032 066
- GB-B- 2 370 540
- US-A1- 2002 189 880
- US-A1- 2010 117 438

## Beschreibung

Die Erfindung betrifft einen Gurtaufroller mit einer elektromotorischen Wickelhilfe mit den Merkmalen des Oberbegriffs von Anspruch 1 und ein Verfahren zur Ansteuerung einer elektromotorischen Wickelhilfe für einen Gurtaufroller mit den Merkmalen des Oberbegriffs von Anspruch 5.

Gurtaufroller mit elektromotorischen Antrieben sind insbesondere als reversible Gurtstraffer bekannt, welche bei einer Aktivierung in einer Vor-Unfallphase vorhandene Gurtlose aus einem Sicherheitsgurt einer Sicherheitsgurteinrichtung herausziehen.

Aus der DE 43 32 205 C2 ist es darüber hinaus auch bekannt, den elektromotorischen Antrieb auch zur Rückholung des Sicherheitsgurtes in die Parkposition zu verwenden. Der elektromotorische Antrieb wird dabei in Abhängigkeit von dem Steckzustand der Gurtzunge angesteuert.

In dem Gurtaufroller ist ferner eine Rückholfeder vorgesehen, welche unabhängig von dem Wirken der elektromotorischen Wickelhilfe eine Rückzugskraft auf den Sicherheitsgurt ausübt. Diese Rückzugskraft sollte aus Komfortgründen im angelegten Zustand des Sicherheitsgurtes möglichst gering sein, wobei trotzdem sichergestellt sein muss, dass der Sicherheitsgurt beim Ablegen zuverlässig in die Parkposition aufgewickelt wird.

Ferner unterliegen die Rückholfedern grundsätzlich Alterungsprozessen, so dass die Rückzugskraft der Rückholfedern mit zunehmender Lebensdauer und der dadurch bedingten hohen Anzahl von Benutzungszyklen abnimmt.

Aus der Druckschrift US 2002/189880 A1 ist es bekannt, den Gurtaufroller mit einem Elektromotor zu versehen, welcher als elektromotorische Wickelhilfe aktiviert wird, wenn die Aufwickelgeschwindigkeit des Sicherheitsgurtes bedingt durch die Alterung der Wickelfeder einen vorbestimmten Wert unterschreitet.

Aufgabe der Erfindung ist es, einen Gurtaufroller mit einer elektromotorischen Wickelhilfe zu schaffen, welcher einen erhöhten Benutzungskomfort aufweist und ein Aufwickeln des Sicherheitsgurtes in die Parkposition auch noch nach einer hohen Anzahl von Benutzungszyklen unabhängig von der Rückzugskraft der Rückholfeder ermöglicht. Ferner ist es Aufgabe der Erfindung, ein Verfahren zur Ansteuerung einer elektromotorischen Wickelhilfe eines Gurtaufrollers zu schaffen, welches ein verbessertes Aufwickeln des Gurtbandes in die Parkposition ermöglicht.

Zur Lösung der Aufgabe wird erfindungsgemäß ein Gurtaufroller mit den Merkmalen des Anspruchs 1 und ein Verfahren mit den Merkmalen des Anspruchs 5 vorgeschlagen. Weitere bevorzugte Ausführungsformen der Erfindung sind den Unteransprüchen, den Figuren und der zugehörigen Beschreibung zu entnehmen.

Gemäß dem Grundgedanken der Erfindung wird vorgeschlagen, dass eine Speichereinheit vorgesehen ist, in welcher verschiedene Ansteuerprofile abgelegt sind, und die elektromotorische Wickelhilfe in Abhängigkeit von dem Überschreiten vorgegebener Benutzungszyklen des Gurtaufrollers und/oder der sensierten Umgebungstemperatur nach unterschiedlichen Ansteuerprofilen ansteuerbar ist. Es hat sich herausgestellt, dass die Rückzugskraft der Rückholfeder mit steigender Anzahl der Benutzungszyklen aufgrund von Alterung sinkt und außerdem von der Umgebungstemperatur abhängig ist. Zur Kompensation dieser Veränderungen der Rückzugskraft sind in der Speichereinheit verschiedene Ansteuerprofile abgelegt, welche dann bei einer Sensierung der entsprechenden Kenngrößen zur Ansteuerung der Wickelhilfe dienen. Diese Ansteuerprofile können z. B. verschiedene Rückzugskräfte oder auch Verläufe der Rückzugskraft umfassen, so dass die gesamte Rückzugskraft aus der Rückzugskraft der Rückholfeder und der Wickelhilfe dann unabhängig von der Alterung der Rückholfeder und der Umgebungstemperatur konstant ist oder einem vorgegebenen Verlauf entspricht.

Ferner wird vorgeschlagen, dass die elektromotorische Wickelhilfe in Abhängigkeit von der Stromaufnahme der Wickelhilfe ansteuerbar ist. Für den Fall, dass der Insasse das Gurtband z.B. festhält und die Aufwickelbewegung dadurch aktiv verhindert wird, steigt die Stromaufnahme der Wickelhilfe über einen vorgegebenen Grenzwert an. In diesem Fall wird die Wickelhilfe dann zu ihrem eigenen Schutz deaktiviert.

Gemäß einer weiteren bevorzugten Ausführungsform der Erfindung wird vorgeschlagen, dass die elektromotorische Wickelhilfe zusätzlich in Abhängigkeit von dem Steckzustand einer in einem Gurtschloss verriegelbaren Gurtzunge ansteuerbar ist. Durch den Steckzustand der Gurtzunge kann das An- und Ablegen des Sicherheitsgurtes sicher erkannt werden. Ferner kann durch einen sich verändernden Steckzustand der Gurtzunge jeweils auf einen Benutzungszyklus geschlossen werden, welche in der Summe einen mittelbaren Rückschluss auf den Alterungszustand der Rückholfeder ermöglichen.

Ferner wird vorgeschlagen, dass der Gurtaufroller eine die Gurtwelle in Aufwickelrichtung vorspannende Rückholfeder aufweist, welche eine Rückzugskraft von weniger als 1 N aufweist. Die vorgeschlagene geringe Rückzugskraft ermöglicht einen sehr angenehmen Tragekomfort des Sicherheitsgurtes für den Insassen, wobei die geringe Rückzugskraft dann durch die Unterstützung durch die Wickelhilfe zum Wegparken des Gurtbandes auf eine höhere Rückzugskraft erhöht wird und das Gurtband sicher in die Parkposition aufgewickelt wird.

Weiter wird zur Lösung der Aufgabe ein Verfahren zur Ansteuerung einer elektromotorischen Wickelhilfe eines Gurtaufrollers vorgeschlagen, bei dem die elektromotorische Wickelhilfe aktiviert wird, wenn ein Gurtschlosssensor keine verriegelte Gurtzunge sensiert und eine Sensoreinrichtung zur Sensierung der Gurtbandeinzugsgeschwindigkeit eine unterhalb eines vorgegebenen Grenzwertes liegende Gurtbandeinzugsgeschwindigkeit sensiert.

Durch die nicht verriegelte Gurtzunge kann in einem ersten Schritt ein abgelegter Sicherheitsgurt erkannt werden. Übersteigt die Gurtbandeinzugsgeschwindigkeit dann nicht den vorgegebenen Grenzwert, so kann darauf geschlossen werden, dass die Rückzugskraft der Rückholfeder nicht ausreichend ist, um das Gurtband in die Parkposition aufzuwickeln. In diesem Fall wird die Wickelhilfe dann aktiviert und das Gurtband durch die Unterstützung der Wickelhilfe sicher aufgewickelt.

Weiter wird vorgeschlagen, dass die elektromotorische Wickelhilfe deaktiviert wird, wenn die Sensoreinrichtung zur Sensierung der Gurtbandeinzugsgeschwindigkeit eine unterhalb eines vorgegebenen Grenzwertes liegende Gurtbandeinzugsgeschwindigkeit sensiert und/oder die Stromaufnahme der elektromotorischen Wickelhilfe einen vorgegebenen Grenzwert überschreitet. Durch das Unterschreiten des vorgegebenen Grenzwertes der Gurtbandeinzugsgeschwindigkeit kann z.B. das Erreichen der Parkposition sensiert werden, da die Gurtbandeinzugsgeschwindigkeit in der Parkposition gleich Null ist und kurz vor dem Erreichen der Parkposition sehr stark sinkt und dabei den vorgegebenen Grenzwert unterschreitet. Alternativ wird die Wickelhilfe auch dann deaktiviert werden, wenn der Insasse den Sicherheitsgurt z.B. festhält und die Stromaufnahme der Wickelhilfe dadurch einen vorgegebenen Grenzwert überschreitet.

Gemäß einer weiteren bevorzugten Ausführungsform der Erfindung wird vorgeschlagen, dass eine Sensoreinrichtung zur Sensierung von Kenngrößen, welche den Alterungszustand einer eine Gurtwelle des Gurtaufrollers in Aufwickelrichtung vorspannenden Rückholfeder kennzeichnen, vorgesehen ist und die elektromotorische Wickelhilfe in Abhängigkeit von dem Alterungszustand der Rückholfeder nach unterschiedlichen Ansteuerprofilen angesteuert wird. Die Sensoreinrichtung kann z.B. ein Gurtschlosssenor sein, dessen Steckvorgänge in einer Auswerteeinheit gezählt werden. Ferner kann die Sensoreinrichtung auch ein auf die Rückholfeder selbst gerichteter Positionssensor sein, welcher die Lage der Rückholfeder sensiert. Für den Fall, dass durch die sensierten Kenngrößen oder die Benutzungszyklen unmittelbar oder mittelbar auf eine Alterung der Rückholfeder und eine nachlassende Rückzugskraft geschlossen werden kann, wird diese nachlassende Rückzugskraft dann durch die Ansteuerung der Wickelhilfe mittels eines individuell für diesen Fall vorgesehenen Ansteuerprofils ausgeglichen. Dieses Ansteuerprofil kann durch eine um einen konstanten Faktor erhöhte Rückzugskraft der Wickelhilfe oder auch durch eine veränderte Charakteristik mit einem individuell angepassten Verlauf der von der Wickelhilfe ausgeübten Rückzugskraft gebildet sein.

Weiter wird vorgeschlagen, dass eine Sensoreinrichtung zur Sensierung der Umgebungstemperatur vorgesehen ist, und die elektromotorische Wickelhilfe in Abhängigkeit von der Umgebungstemperatur nach unterschiedlichen Ansteuerprofilen angesteuert wird. Durch die Umgebungstemperatur kann die Rückzugskraft der Rückholfeder auch unabhängig von ihrem Alterungszustand variieren. Diese Veränderung der Rückzugskraft kann dann durch eine entsprechende Unterstützung der Rückholbewegung durch die Wickelhilfe soweit kompensiert werden, dass das Gurtband wieder mit einer vorgegebenen Mindestrückzugskraft sicher aufgewickelt wird.

Die Erfindung wird im Folgenden anhand einer bevorzugten Ausführungsform unter Bezugnahme auf die beigefügten Figuren erläutert. Dabei zeigt:
- Fig. 1:: einen erfindungsgemäßen Gurtaufroller mit einer elektromotorischen Wickelhilfe;
- Fig. 2:: eine schematisch dargestellte Wickelhilfe mit einer Steuereinrichtung;
- Fig. 3:: eine erfindungsgemäße Ansteuerlogik zum Aktivieren der Wickelhilfe; und
- Fig. 4:: eine erfindungsgemäße Ansteuerlogik zum Deaktivieren der Wickelhilfe.

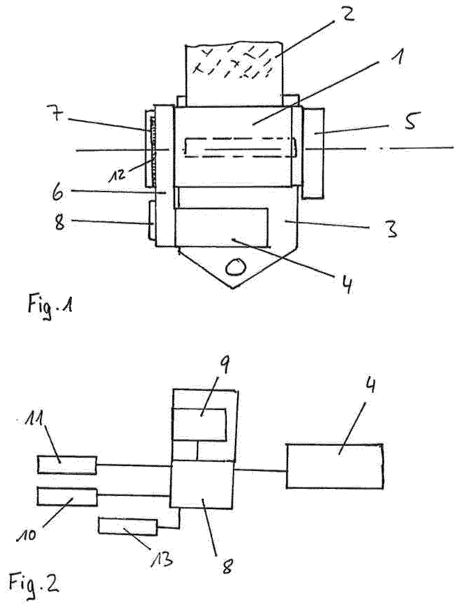

In der Fig. 1 ist ein Gurtaufroller mit einer drehbar in einem Rahmen 3 gelagerten zweiteiligen Gurtwelle 1 mit einer zwischen den beiden Teilen angeordneten Kraftbegrenzungseinrichtung zu erkennen. Auf dem Gurtwellenkörper der zweiteiligen Gurtwelle 1 ist ein Gurtband 2 einer Sicherheitsgurteinrichtung aufwickelbar, während der andere Teil der Gurtwelle 1 durch eine Ansteuerung einer fahrzeugsensitiv und/oder gurtbandsensitiv ansteuerbaren Blockiereinrichtung in dem Rahmen 3 fahrzeugfest verriegelbar ist, so dass der Gurtwellenkörper mit dem aufgewickelten Gurtband 2 anschließend nur noch durch eine Aktivierung der Kraftbegrenzungseinrichtung in Gurtbandauszugsrichtung drehen kann. Die zweiteilige Gurtwelle 1 ist ferner über eine in einer Federkassette 7 gehaltenen Rückholfeder 12 in Aufwickelrichtung federvorgespannt, welche als sehr schwache Rückholfeder 12 mit einer Rückzugskraft von 0,5 bis 1,0 N ausgelegt ist.

Die Sicherheitsgurteinrichtung umfasst ferner eine auf dem Gurtband 2 verschieblich geführte Gurtzunge, ein fahrzeugfest befestigtes Gurtschloss, einen fahrzeugfest befestigten Endbeschlag zur Befestigung des freien Endes des Gurtbandes an der Fahrzeugstruktur und gegebenenfalls einen fahrzeugfest befestigten Umlenker. Die genannten Einzelteile der Sicherheitsgurteinrichtung sind nicht dargstellt, können aber als im Stand der Technik bekannt hinzugedacht werden.

Ferner ist an dem Rahmen 3 des Gurtaufrollers eine elektromotorische Wickelhilfe 4 in Form eines Elektromotors vorgesehen, welche über ein Getriebe 6 an die Gurtwelle 1 ankoppelbar ist. An dem Getriebe 6 ist eine Steuereinrichtung 8 zur Ansteuerung der Wickelhilfe 4 vorgesehen, welche, wie in der Fig. 2 zu erkennen ist, signaltechnisch mit einer Sensoreinrichtung 11 zur Erkennung des Verriegelungszustandes BS der Gurtzunge in dem Gurtschloss, einer Sensoreinrichtung 10 zur Sensierung der Gurtbandeinzugsgeschwindigkeit BRS und einer Sensoreinrichtung 13 zur Sensierung der Umgebungstemperatur verbunden. Die Sensoreinrichtung 10 zur Sensierung der Gurtbandeinzugsgeschwindigkeit BRS kann z.B. durch ein drehfest mit dem Gurtwellenkörper verbundenes Magnetrad mit einer Vielzahl von Einzelmagneten mit einer unterschiedlichen Ausrichtung und einem auf das Magnetrad gerichteten Hallsensor gebildet sein. In der Steuereinrichtung 8 ist ferner eine Speichereinheit 9 vorgesehen, in welcher verschiedene Ansteuerprofile abgelegt sind. Die Ansteuerprofile können individuelle Ansteuerdaten für die elektromotorische Wickelhilfe 4 zur Erzeugung von unterschiedlichen in Aufwickelrichtung der Gurtwelle 1 wirkenden Rückzugskräften umfassen. Dabei kann sowohl die Höhe als auch der Verlauf der Rückzugskräfte in den verschiedenen Ansteuerprofilen unterschiedlich sein. Ferner können die Ansteuerprofile auch auf unterschiedliche Rückholfedern 12 mit unterschiedlichen Rückzugskräften ausgelegt sein, so dass die Wickelhilfe 4 auch für Gurtaufroller mit unterschiedlichen Rückholfedern 12 verwendet werden kann.

Die elektromotorische Wickelhilfe 4 ist dabei bevorzugt direkt an die Gurtwelle 1 oder an das innere Ende der Rückholfeder 12 angekoppelt, so dass die Rückholfeder 12 und die Wickelhilfe 4 parallel auf die Gurtwelle 1 wirken. Dadurch addieren sich die von der Rückholfeder 12 und der Wickelhilfe 4 auf die Gurtwelle 1 ausgeübten Rückzugskräfte, und es ist auch bei einem Ausfall der Wickelhilfe 4 oder der Rückholfeder 12 immer noch eine geringe auf das Gurtband 2 wirkende Rückzugskraft vorhanden.

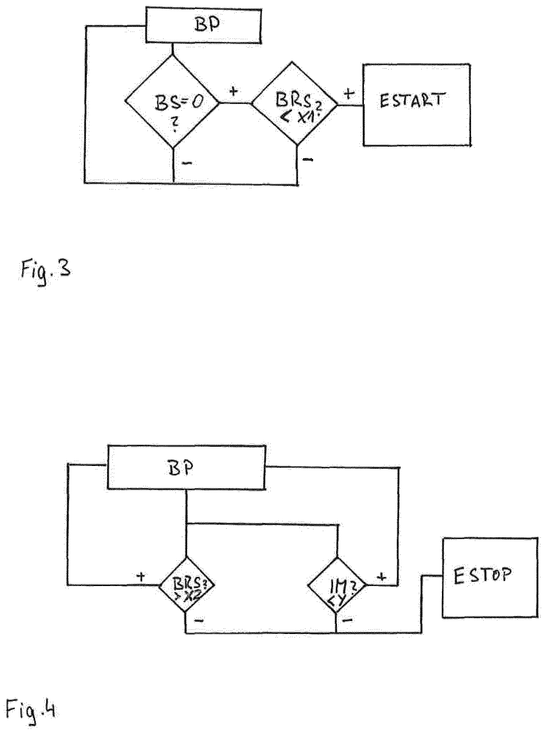

In den Fig. 3 und Fig. 4 ist die Ansteuerlogik des erfindungsgemäßen Verfahrens in der Steuereinrichtung 8 zum Aktivieren und Deaktivieren der Wickelhilfe 4 dargestellt.

Die Wickelhilfe 4 wird aktiviert, wenn die Sensoreinrichtung 11 im Anschluss an eine Verriegelung eine nicht verriegelte Gurtzunge erkennt, wodurch der Wert von BS = 1 auf BS = 0 gesetzt wird, und gleichzeitig eine Gurtbandeinzugsgeschwindigkeit BRS sensiert wird, welche unterhalb eines vorgegebenen ersten Grenzwertes X1 liegt. Die Aktivierung der Wickelhilfe 4 ist als Ergebnis ESTART dargestellt. Ist eines der Kriterien nicht erfüllt, wird das Gurtband allein von der Rückholfeder 12 eingezogen. Dieses Ergebnis der Abfrage ist mit BP gekennzeichnet.

Nach der Aktivierung der Wickelhilfe 4 wird diese nach der in der Fig. 4 dargestellten Abfragelogik wieder deaktiviert.

Die Wickelhilfe 4 wird deaktiviert, wenn die Stromaufnahme IM der Wickelhilfe einen vorgegebenen ersten Grenzwert Y überschreitet oder die Gurtbandeinzugsgeschwindigkeit BRS einen vorgegebenen zweiten Grenzwert X2 unterschreitet. Für den Fall, dass keines der Kriterien erfüllt ist, wird die Wickelhilfe 4 nicht angesteuert, und der aktivierte Zustand der Wickelhilfe 4 wird nicht verändert, so dass das Gurtband weiter mit Hilfe der Wickelhilfe 4 in die Parkposition aufgerollt wird. Dieser Zustand ist als BP gekennzeichnet. Für den Fall, dass eines der Kriterien erfüllt ist, wird die Wickelhilfe 4 deaktiviert. Dieses Deaktivieren ist in der Fig. 4 mit dem Ergebnis ESTOP gekennzeichnet.

Die Ansteuerung der Wickelhilfe 4 erfolgt dabei nach einem Zyklus, d.h. die Ansteuerlogik nach dem in der Fig. 3 dargestellten Diagramm wird erst dann abgefragt, wenn nach dem wiederholten Ausziehen des Gurtbandes und einem Verriegeln der Gurtzunge in dem Gurtschloss der Wert für den Steckzustand der Gurtzunge auf den Wert BS = 1 gesetzt wurde.

## Patentansprüche

1. Gurtaufroller mit einer elektromotorischen Wickelhilfe (4) umfassend:
- eine in Aufwickelrichtung federvorgespannte, in einem Rahmen (3) des Gurtaufrollers drehbar gelagerte Gurtwelle (1), auf welcher ein Gurtband (2) aufwickelbar ist, wobei
- die elektromotorische Wickelhilfe (4) in Abhängigkeit von der Gurtbandeinzugsgeschwindigkeit (BRS) ansteuerbar ist, **dadurch gekennzeichnet, dass**
- eine Speichereinheit (9) vorgesehen ist, in welcher verschiedene Ansteuerprofile abgelegt sind, und
- die elektromotorische Wickelhilfe (4) in Abhängigkeit von dem Überschreiten vorgegebener Benutzungszyklen des Gurtaufrollers und/oder der sensierten Umgebungstemperatur nach unterschiedlichen Ansteuerprofilen ansteuerbar ist.

2. Gurtaufroller nach Anspruch 1, **dadurch gekennzeichnet, dass**
- die elektromotorische Wickelhilfe (4) in Abhängigkeit von der Stromaufnahme (IM) der Wickelhilfe (4) ansteuerbar ist.

3. Gurtaufroller nach einem der vorangegangenen Ansprüche,
**dadurch gekennzeichnet, dass**
- die elektromotorische Wickelhilfe (4) in Abhängigkeit von dem Steckzustand (BS) einer in einem Gurtschloss verriegelbaren Gurtzunge ansteuerbar ist.

4. Gurtaufroller nach einem der vorangegangenen Ansprüche,
**dadurch gekennzeichnet, dass**
- der Gurtaufroller eine die Gurtwelle (1) in Aufwickelrichtung vorspannende Rückholfeder (12) aufweist, welche eine Rückzugskraft von weniger als 1 N aufweist.

5. Verfahren zur Ansteuerung einer elektromotorischen Wickelhilfe eines Gurtaufrollers wobei
- die elektromotorische Wickelhilfe (4) aktiviert wird, wenn
- ein Gurtschlosssensor keine verriegelte Gurtzunge sensiert und
- eine Sensoreinrichtung (10) zur Sensierung der Gurtbandeinzugsgeschwindigkeit (BRS) ein unterhalb eines vorgegebenen ersten Grenzwertes (X1) liegende Gurtbandeinzugsgeschwindigkeit (BRS) sensiert,
**dadurch gekennzeichnet, dass**
- eine Sensoreinrichtung (13) zur Sensierung der Umgebungstemperatur vorgesehen ist, und
- die elektromotorische Wickelhilfe (4) in Abhängigkeit von der Umgebungstemperatur nach unterschiedlichen Ansteuerprofilen angesteuert wird.

6. Verfahren nach Anspruch 5, **dadurch gekennzeichnet, dass**
- die elektromotorische Wickelhilfe (4) deaktiviert wird, wenn
- die Sensoreinrichtung (10) zur Sensierung der Gurtbandeinzugsgeschwindigkeit (BRS) eine unterhalb eines vorgegebenen zweiten Grenzwertes (X2) liegende Gurtbandeinzugsgeschwindigkeit (BRS) sensiert und/oder
- die Stromaufnahme (IM) der elektromotorischen Wickelhilfe (4) einen vorgegebenen Grenzwert überschreitet.

7. Verfahren nach einem der Ansprüche 5 oder 6, **dadurch gekennzeichnet, dass**
- eine Sensoreinrichtung zur Sensierung von Kenngrößen, welche den Alterungszustand einer eine Gurtwelle (1) des Gurtaufrollers in Aufwickelrichtung vorspannenden Rückholfeder (12) kennzeichnen, vorgesehen ist, und
- die elektromotorische Wickelhilfe (4) in Abhängigkeit von dem Alterungszustand der Rückholfeder (12) nach unterschiedlichen Ansteuerprofilen angesteuert wird.

## Claims

1. Belt retractor with an electromotive winding aid (4) comprising:
- a belt shaft (1) which is prestressed by a spring in the winding direction, is rotatably supported in a frame (3) of the belt retractor, and on which a belt strap (2) can be wound, wherein the electromotive winding aid (4) can be controlled as a function of the draw-in speed of the belt strap (BRS),
**characterized by that**
- a memory unit (9) is provided in which different control profiles are stored, and
- that the electromotive winding aid (4) can be controlled as a function of exceeding of given cycles of use of the belt retractor and/or of the sensed ambient temperature according to different control profiles.

2. Belt retractor according to Claim 1, **characterized by that**
- the electromotive winding aid (4) can be controlled as a function of the current reception (IM) of the winding aid (4).

3. Belt retractor according to one of the previous claims,
**characterized by that**
- the electromotive winding aid (4) can be controlled as a function of the inserted state (BS) of a belt tongue that can be locked in a belt lock.

4. Belt retractor according to one of the previous claims,
**characterized by that**
- the belt retractor comprises a retention spring (12) which prestresses the belt shaft in the winding direction, and which has a return force of less than 1 N.

5. Method for controlling an electromotive winding aid (4) of a belt retractor, wherein
- the electromotive winding aid (4) is activated when
- a belt lock sensor does not sense a locked belt tongue and
- a sensor device (10) for sensing the belt strap draw-in speed (BRS) senses a belt draw-in speed (BRS) located below a given first threshold value (X1),
**characterized by that:**
- a sensor device (13) for sensing the ambient temperature is provided, and
- that the electromotive winding aid (4) is controlled as a function of the ambient temperature according to different control profiles.

6. Method according to claim 5, **characterized by that**
- the electromotive winding aid (4) is deactivated if
- the sensor device (10) for sensing the belt strap draw-in speed senses a belt strap draw-in speed (BRS) located below a given second threshold value (X2) and/or
- the current reception (IM) of the electromotive winding aid (4) exceeds a given threshold value.

7. Method according to one of claims 5 or 6, **characterized by that**
- a sensor device for sensing parameters which characterize the aging state of a retention spring (12) prestressing a belt shaft (1) of the belt roller in the winding direction is provided, and
- that the electromotive winding aid (4) is controlled as a function of the aging state of the retention spring (12) according to different control profiles.

## Revendications

1. Enrouleur de ceinture doté d'un dispositif électromotorisé d'assistance à l'enroulement (4), comprenant :
- un arbre de ceinture (1) prétensionné dans le sens de l'enroulement, monté rotatif dans un bâti (3) de l'enrouleur de ceinture et sur lequel peut s'enrouler une sangle de ceinture (2), dans lequel :
- le dispositif électromotorisé d'assistance à l'enroulement (4) peut être commandé en fonction de la vitesse de rétraction de la sangle de ceinture (BRS),
**caractérisé en ce que**
- il est prévu une unité de mémoire (9) qui contient différents profils de commande, et
- le dispositif électromotorisé d'assistance à l'enroulement (4) peut être commandé en fonction du dépassement de cycles d'utilisation prédéfinis de l'enrouleur de ceinture et/ou de la température ambiante captée, selon différents profils de commande.

2. Enrouleur de ceinture selon la revendication 1, **caractérisé en ce que**
- le dispositif électromotorisé d'assistance à l'enroulement (4) peut être commandé en fonction du courant absorbé (IM) par le dispositif d'assistance à l'enroulement (4).

3. Enrouleur de ceinture selon l'une des revendications précédentes, **caractérisé en ce que**
- le dispositif électromotorisé d'assistance à l'enroulement (4) peut être commandé en fonction de l'état d'enfoncement (BS) d'une languette de ceinture susceptible d'être verrouillée dans une boucle de ceinture.

4. Enrouleur de ceinture selon l'une des revendications précédentes, **caractérisé en ce que**
- l'enrouleur de ceinture présente un ressort de rappel (12) prétensionnant l'arbre de ceinture (1) dans le sens de l'enroulement et possédant une force de rappel de moins de 1 N.

5. Procédé de commande d'un dispositif électromotorisé d'assistance à l'enroulement d'un enrouleur de ceinture, dans lequel :
- le dispositif électromotorisé d'assistance à l'enroulement (4) s'active lorsque :
- un détecteur de boucle de ceinture détecte que la languette de ceinture n'est pas verrouillée, et
- un dispositif de détection (10) destiné à détecter la vitesse de rétraction de la sangle de ceinture (BRS) détecte une vitesse de rétraction de la sangle de ceinture (BRS) située en dessous d'une première valeur limite prédéfinie (X1),
**caractérisé en ce que** :
- un dispositif de détection (13) est prévu pour détecter la température ambiante, et
- le dispositif électromotorisé d'assistance à l'enroulement (4) est commandé en fonction de la température ambiante selon différents profils de commande.

6. Procédé selon la revendication 5, **caractérisé en ce que**
- le dispositif électromotorisé d'assistance à l'enroulement (4) se désactive lorsque :
- le dispositif de détection (10) destiné à détecter la vitesse de rétraction de la sangle de ceinture (BRS) détecte une vitesse de rétraction de la sangle de ceinture (BRS) située en dessous d'une deuxième valeur limite prédéfinie (X2), et/ou
- le courant absorbé (IM) par le dispositif électromotorisé d'assistance à l'enroulement (4) dépasse une valeur limite prédéfinie.

7. Procédé selon l'une des revendications 5 et 6, **caractérisé en ce que**
- un dispositif de détection est prévu pour détecter des valeurs caractéristiques de l'état de vieillissement d'un ressort de rappel (12) prétensionnant un arbre de ceinture (1) de l'enrouleur de ceinture dans le sens de l'enroulement, et
- le dispositif électromotorisé d'assistance à l'enroulement (4) est commandé en fonction de l'état de vieillissement du ressort de rappel (12) selon différents profils de commande.
